Europäisches Patentamt

European Patent Office

Office européen des brevets

(11) Veröffentlichungsnummer: **0 400 388**

**A2**

## (12) EUROPÄISCHE PATENTANMELDUNG

(21) Anmeldenummer: **90109051.4**

(22) Anmeldetag: **14.05.90**

(51) Int. Cl.5: **F16B 12/14**

(30) Priorität: **01.06.89 DE 3917877**

(43) Veröffentlichungstag der Anmeldung:
**05.12.90 Patentblatt 90/49**

(84) Benannte Vertragsstaaten:
**AT DE FR GB IT**

(71) Anmelder: **DETHLEFFS CARAVANS GMBH**
**Rangenbergweg**
**D-7972 Isny(DE)**

(72) Erfinder: **Schmidt, Gerhard**
**Am Dreifingerbach 27**
**D-7972 Isny(DE)**

(74) Vertreter: **Patentanwälte Dipl.-Ing. E. Eisele**
**Dr.-Ing. H. Otten**
**Seestrasse 42**
**D-7980 Ravensburg(DE)**

(54) **Möbelverbinder, insbesondere für den Wohnwagenbau.**

(57) Es wird ein Möbelverbinder, insbesondere für den Wohnwagenbau, zur Befestigung plattenförmiger Möbelteile an dazu senkrechten Befestigungsflächen, vorgeschlagen, der das Einbauen von Wohnwagenmöbeln vereinfacht. Der Möbelverbinder besteht aus einem flachen, im wesentlichen zylindrischen Grundkörper (1) aus Kunststoff, der in eine entsprechende Ausfräsung des Möbelteils einpreßbar ist und einen diametral verlaufenden Schraubkanal (2) aufweist, der es ermöglicht, eine den Grundkörper (1) und die Stoßfläche des Möbelteils durchsetzende Kopfschraube (7) einzudrehen. Kennzeichnend ist, daß an dem Grundkörper (1) in Schraubrichtung ein Dübel (4) ansitzt, wobei ein zwischen dem Grundkörper und dem Dübel befindlicher, einen Abstand bewirkender Verbindungsabschnitt (3) durch die Zugkraft der Schraube (7) stauch- und/oder zerstörbar ist. Zweckmäßigerweise besteht der Verbindungsabschnitt (3) aus mehreren, den Schraubenschaft umgebenden achsparallelen dünnen Stegen (8).

FIG. 1

EP 0 400 388 A2

## Möbelverbinder, insbesondere für den Wohnwagenbau

Die Erfindung betrifft einen Möbelverbinder mit den Merkmalen des Oberbegriffs des Patentanspruchs 1. Ein solcher Möbelverbinder wird von der Häfele KG, D-7270 Nagold, angeboten und ist z. B. mit der Bestellnummer 262.43.185 aus deren Katalog bekannt.

Gewöhnlich haben Wohnwagen-Außenwände eine Fachwerkstruktur aus an der Innenseite vorzugsweise mit Sperrholz beplankten Rahmenhölzern, wobei die Hohlräume zwischen den Rahmenhölzern mit einem wärmeisolierenden Werkstoff ausgefüllt sind. Die Befestigungsschrauben der Einbaumöbel gehen daher, wenn sie auf die Rahmenhölzer treffen, in massives Holz, andernfalls in das verhältnismäßig dünnschichtige Sperrholz, wo sie nur unzureichenden Halt finden. Es ist daher bekannt, an den Befestigungsstellen der Einbaumöbel hinter dem Sperrholz Bleche oder Hölzer in die Außenwände einzulegen, in denen die Schrauben besser greifen.

Der Möbeleinbau verläuft gewöhnlich so, daß die Möbelteile, in welche die Verbinder-Grundkörper bereits eingesetzt sind, an die Wohnwagenaußenwand gestoßen und nach den Maßangaben in die richtige Stellung gebracht werden. Dies ist sehr zeitaufwendig. Andererseits ist es auch schon bekannt, in der Außenwand und den Stoßflächen der Möbelteile Zapfenlöcher und damit genau zusammenpassende Positionierungszapfen anzubringen. Dies erfordert aber weitere zusätzliche Bearbeitungsvorgänge.

Der Erfindung liegt die Aufgabe zugrunde, einen Möbelverbinder vorzuschlagen, der den Einbau von Wohnwagenmöbeln vereinfacht, insbesondere zeitaufwendige Positionierungsarbeiten und das Einlegen von Verankerungsteilen in die Außenwände erübrigt.

Diese Aufgabe wird ausgehend von einem Möbelverbinder der einleitend bezeichneten Art erfindungsgemäß dadurch gelöst, daß an dem Grundkörper in Schraubrichtung ein Dübel ansitzt, wobei ein zwischen dem Grundkörper und dem Dübel befindlicher, einen Abstand bewirkender Verbindungsabschnitt durch die Zugkraft der Schraube stauch- und/oder zerstörbar ist.

Damit ist ein einteiliger Möbelverbinder geschaffen, der zwei Vorteile in sich vereinigt. Zum einen bewirkt er die zuverlässige Verankerung der Befestigungsschrauben in der Außenwand unabhängig vom Verlauf der Rahmenhölzer und zum anderen erübrigt er Positionierungslöcher und -zapfen. Lediglich die Ausfräsung in dem Möbelteil, in welche der neue Korpusverbinder eingelegt wird, muß auf dessen Form abgestimmt und mit einem zum Stoßrand hin geöffneten Aufnahmekanal für den Dübel und die Verbindungspartie versehen sein. Die Dübellöcher in der Außenwand können bei deren Herstellung mittels ohnehin verwendeter CNC-gesteuerter Bearbeitungsmaschinen sehr präzise eingebracht werden.

Die Dübel stehen nach dem Einpressen der Grundkörper in die Möbelteile ähnlich wie Positionierungszapfen von deren Stoßflächen ab und werden beim Ansetzen des Möbelteils gemeinsam in ihre Löcher eingeführt, was angesichts der Länge der Dübel und der Flexibilität der Verbindungsabschnitte außerordentlich einfach ist. Sodann brauchen nur noch die Schrauben eingedreht zu werden. Dabei ist es von besonderer Bedeutung, daß wenn die Zugkraft der Schraube gegen Ende des Befestigungsvorgangs zur Wirkung kommt, der Dübel und der zugehörige Grundkörper sich einander annähern können, so daß das Möbelteil satt an der Wand anliegt. Dies wird möglich durch die Stauchfähigkeit des Verbindungsabschnitts, der andererseits aber auch wenigstens so steif sein sollte, daß der Dübel mit ausreichender Kraft in sein Loch eingesteckt werden kann.

Vorzugsweise ist der Dübel an dem zugehörigen Grundkörper angeformt, d. h. einstückig, z. B. in Spritzgußtechnik, aus dem gleichen Werkstoff hergestellt. Der Verbindungsabschnitt besteht zweckmäßigerweise aus mehreren, den Schraubenschaft umgebenden, achsparallelen dünnen Stegen, die beim Zusammenstauchen nach außen knicken und dabei möglicherweise auch abbrechen. Der Verbindungsabschnitt kann aber auch eine andere zweckmäßige Gestaltung haben, die sich ab einer bestimmten Belastung zusammenstauchen läßt, so z. B. als geschlitzter oder aufgeblähter Rohrabschnitt. Der Dübel ist vorzugsweise ein kombinierter Klemm- und Spreizdübel, der seine Haltewirkung sowohl in einem massiven Werkstoff als auch durch Aufspreizen in einem dünnen Schichtwerkstoff entfaltet. Ein Ausführungsbeispiel der Erfindung wird nachfolgend anhand der Zeichnung erläutert. Im einzelnen zeigt

Fig. 1 die Draufsicht eines Möbelverbinders mit angesetztem Dübel,

Fig. 2 einen Längsschnitt II-II dieses Möbelverbinders,

Fig. 3 einen Querschnitt III-III,

Fig. 4 einen Querschnitt IV-IV des Verbindungsabschnitts dieses Möbelverbinders,

Fig. 5 einen Querschnitt V-V des angesetzten Dübels, ·

Fig. 6 eine seitliche Schnittdarstellung in kleinerem Maßstab der Anschlußstelle eines Möbelteils an einer Wohnwagen-Außenwand unter Verwendung des Korpusverbinders nach Fig. 1 und

Fig. 7 die Draufsicht einer solchen Anschlußstelle, teilweise geschnitten, wobei der Dübel in einer Rahmenleiste sitzt.

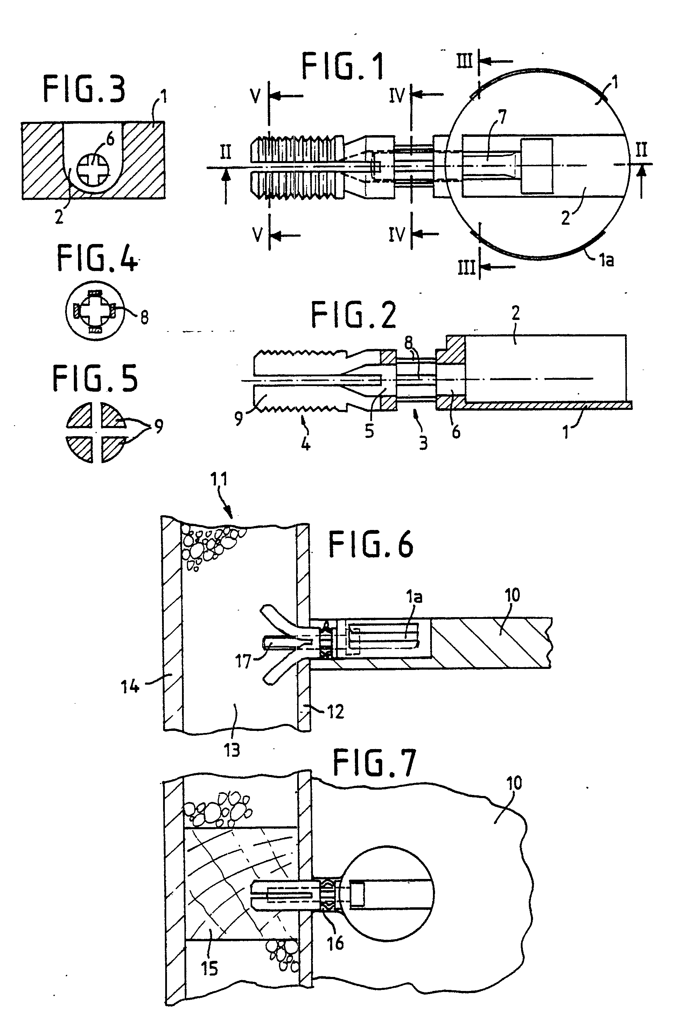

Nach den Figuren 1 bis 3 ist der flache, im wesentlichen kreisrunde Grundkörper 1, der an seiner Mantelfläche zur besseren Haftung im Holz eine Riffelung 1a aufweist, mit einer diametralen Vertiefung, dem sogenannten Schraubkanal 2 versehen, der im Beispiel zum Boden des Grundkörpers parallel verläuft und nach einer Seite geöffnet ist. In Verlängerung dieses Schraubkanals ist mittels eines Verbindungsabschnitts 3 ein Dübel 4 an den Grundkörper angeformt. Die gewindelose Dübelöffnung 5 fluchtet mit einem ebenfalls gewindelosen Durchlaß 6 im Grundkörper an der Stirnseite des Schraubkanals. Hier wird eine Kopfschraube 7, die einen mit Maschinengewinde versehenen Schaft hat, eingesteckt, und zwar zweckmäßigerweise schon vor dem Einsetzen des Korpusverbinders in die entsprechende Ausfräsung des Möbelteils.

Der Verbindungsabschnitt 3 besteht im Beispiel aus vier querschnittlich rechteckigen dünnen Stegen 8, die unmittelbar um den Schraubenschaft herum angeordnet sind, so daß radial nach außen bis zum Außendurchmesser des Dübelschafts freier Raum bleibt.

In Fig. 5 sind die Finger 9 des Dübels 4 im Querschnitt dargestellt. Der Fingerquerschnitt hat die Form eines Kreisquadranten und geht im Schaftbereich zur Dübelöffnung 5 hin in eine Bogenform über. Das führt zum Aufspreizen der Finger 9, sofern der Dübel in einem Flachmaterial steckt.

Das zeigt Fig. 6. Das dargestellte plattenförmige Möbelteil 10 ist senkrecht an die Außenwand 11 eines Wohnwagens gestoßen und zwar an einer Stelle an der die Außenwand aus einer Innenbeplankung 12 aus Sperrholz, einer Dämmschicht 13 aus Polystyrol-Hartschaum und einer Außenbeplankung 14 mit wetterfester Außenhaut besteht. Die Finger 9 des Dübels sind unter Verdrängung der Dämmschicht aufgespreizt und die Stege 8 des Verbindungsabschnitts gestaucht und nach außen geknickt.

Diese Stauchung der Stege 8 zeigt auch Fig. 7, welche das Möbelteil 10 in der Draufsicht und die geschnittene Außenwand 11 an einer Stelle zeigt, an der sich ein Rahmenholz 15 befindet, in welches der Dübel 4 eingreift.

Die Außenwand 11 ist zur Befestigung der Möbelteile insofern vorbereitet, als bei der Bearbeitung mit einer CNC-gesteuerten Universalmaschine die Dübelbohrungen mit eingebracht werden. Bei der Bearbeitung der Möbelteile 10 ist zu berücksichtigen, daß die runde Ausfräsung zur Aufnahme des Grundkörpers 1 durch einen Kanal 16 zum Stoßrand hin geöffnet sein muß. In diesem Kanal befindet sich der Verbindungsabschnitt 3 und ein Stück des Dübelschafts. Bei der Montage werden die nach vorn herausstehenden Dübel beim Ansetzen des Möbelteils gemeinsam in ihre Dübellöcher eingestoßen, wodurch das Möbelteil gleichzeitig exakt positioniert ist. Es brauchen also nur die schon vorher eingelegten Kopfschrauben 7 mittels eines entsprechenden Schraubendrehers eingedreht zu werden. Gegen Ende des Spannvorgangs, wenn die Zugkraft der Schraube zur Wirkung kommt, wird das Möbelteil 10 satt an die Innenbeplankung 12 herangezogen, wobei sich der Verbindungsabschnitt 3 wie beschrieben staucht. Der Kanal 16 bietet den dazu erforderlichen Raum. Ggf. kann, wie an sich bekannt, der eingesetzte Möbelverbinder zum Verschluß des Schraubkanals 2 sowie des Kanals 16 mit einem aufschnappbaren Deckel versehen werden.

**Ansprüche**

1. Möbelverbinder, insbesondere zur Befestigung von plattenförmigen Möbelteilen an den dazu senkrechten Außenwänden von Wohnwagen, mit einem flachen, im wesentlichen zylindrischen Grundkörper aus Kunststoff, der in eine in der Nähe der Stoßkante an einer Seite des Möbelteils angebrachte Ausfräsung einpreßbar ist und einen diametral verlaufenden Schraubkanal aufweist, der es ermöglicht, eine in Verlängerung des Schraubkanals den Grundkörper und die Stoßfläche des Möbelteils durchsetzende Kopfschraube mittels eines Schraubendrehers einzudrehen, dadurch gekennzeichnet, daß an dem Grundkörper (1) in Schraubrichtung ein Dübel (4) ansitzt, wobei ein zwischen dem Grundkörper und dem Dübel befindlicher, einen Abstand bewirkender Verbindungsabschnitt (3) durch die Zugkraft der Schraube (7) stauch- und/oder zerstörbar ist.

2. Möbelverbinder nach Anspruch 1, dadurch gekennzeichnet, daß der Dübel (4) an den Grundkörper (1) angeformt ist.

3. Möbelverbinder nach Anspruch 1, dadurch gekennzeichnet, daß der Verbindungsabschnitt (3) mehrere den Schraubenschaft umgebende achsparallele, dünne Stege (8) umfaßt.

4. Möbelverbinder nach Anspruch 1, dadurch gekennzeichnet, daß der Dübel (4) ein kombinierter Klemm-und Spreizdübel ist.

FIG.3

FIG.4

FIG.5

FIG.1

FIG.2

FIG.6

FIG.7